# EUROPEAN PATENT SPECIFICATION

(11) **EP 1 420 202 B1**
(45) Date of publication and mention of the grant of the patent: **25.01.2012**
(21) Application number: 03016376.0
(22) Date of filing: 19.07.2003
(51) Int. Cl.: F16M 13/00, F16M 11/00, F16M 11/10

(54) **Display with replaceable stand**
Bildschirm mit abnehmbarem Stativ
Ecran de visualisation à support amovible

(30) Priority: 14.11.2002 CN 02287312 U
(43) Date of publication of application: 19.05.2004
(73) Proprietor: AU Optronics Corporation, Hsinchu 300 (TW)
(72) Inventor: Liu, Chia-Yu, Lungtan Shiang, Taoyuan (TW); Chang, Lien-Wen, Linkou Shiang, Taipei (TW); Li, Chang-Chien, Shinjuang City, Taipei (TW)
(74) Representative: Rottmann, Maximilian

(56) References cited:
- US-A- 6 081 420
- US-B1- 6 366 452
- US-B1- 6 418 010
- PATENT ABSTRACTS OF JAPAN vol. 017, no. 277 (P-1546), 27 May 1993 (1993-05-27) -& JP 05 011707 A (MATSUSHITA ELECTRIC IND CO LTD), 22 January 1993 (1993-01-22)

## Description

### BACKGROUND OF THE INVENTION

### Field of the Invention

The invention relates to a display, and more particularly to a display with replaceable stand.

### Description of the Related Art

As display technology progresses, displays have become compacter and lighter. Therefore, the flat display has replaced the traditional cathode ray tube (CRT) in recent years. Since the flat display weighs less and emits less radiation, it has become a very important electronic product.

As the advantages mentioned above, the flat display can be carried and used in many different places. In order to expand the utility of the flat display in variable environments, a flexible base stand is necessary.

The traditional base stand for the flat display usually has a pedestal with a flat bottom to sustain the whole body. However, the flat display with traditional base can only be put on an even surface. Moreover, for providing a stable support, the traditional base stand is usually heavy and not portable.

Document US 6 366 452 shows a flat display containing the features of the preamble of claim 1.

### SUMMARY OF THE INVENTION

An object of the present invention is to provide a flat display with replaceable stand. The flat display comprises a first stand, a second stand detachably connected to the first stand, and a main body selectively supported by the second stand while the first stand is connected to the second stand or merely by the main body, wherein the first stand is hinged on the main body. Users can selectively position the flat display using the base stand or the simple stand in different environments.

Particularly, when placed for a long period of time or on an even surface, the flat display of the present invention can use the base stand for a stable support. Additionally, the flat display of the present invention also can be placed using the simple stand if it needs frequent moving or placement on an uneven surface. Furthermore, a handle is disposed on the flat display so that users can carry and move the flat display more easily.

### DESCRIPTION OF THE DRAWINGS

For a better understanding of the present invention, reference is made to a detailed description to be read in conjunction with the accompanying drawings, in which:
FIG. 1 is a perspective diagram in front view of a flat display in accordance with the present invention;
FIG. 2 is a perspective diagram in back view of a flat display using the simple base stand in accordance with the present invention;
FIG. 3 is a perspective diagram in back view of a flat display using the base stand in accordance with the present invention;
FIG. 4 is an exploded diagram of the base stand in accordance with the present invention;
FIG. 5 is a perspective diagram without combining the base stand with the simple stand;
FIG. 6 is a perspective diagram after combining the base stand with the simple stand;
FIG. 7 is a lateral view of a flat display with the main body and the simple stand at a small angle;
FIG. 8 is a lateral view of a flat display with the main body and the simple stand at a large angle.

### DETAILED DESCRIPTION OF THE INVENTION

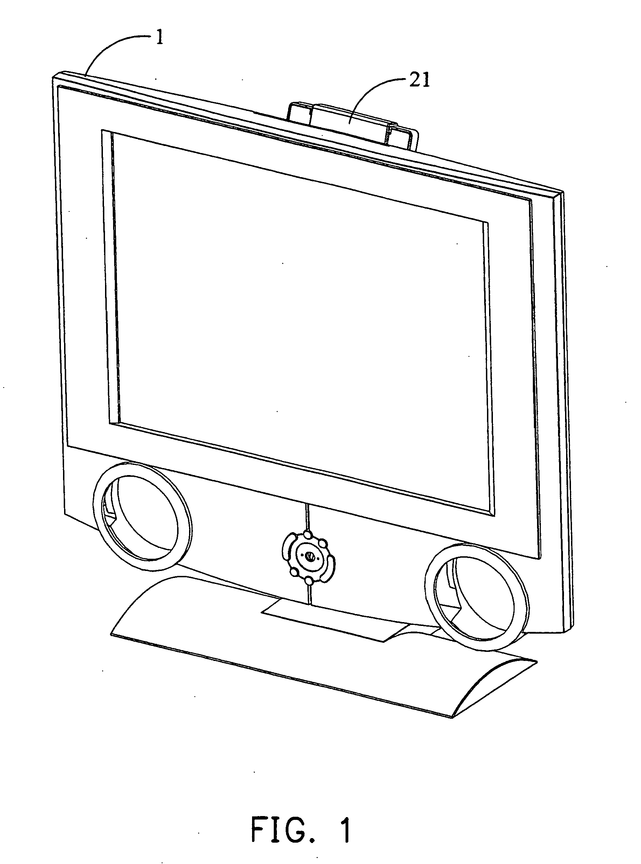

As shown in FIG. 1, the flat display of the present invention comprises a main body 1 connected with a handle 21 so that users can lift the flat display easily.

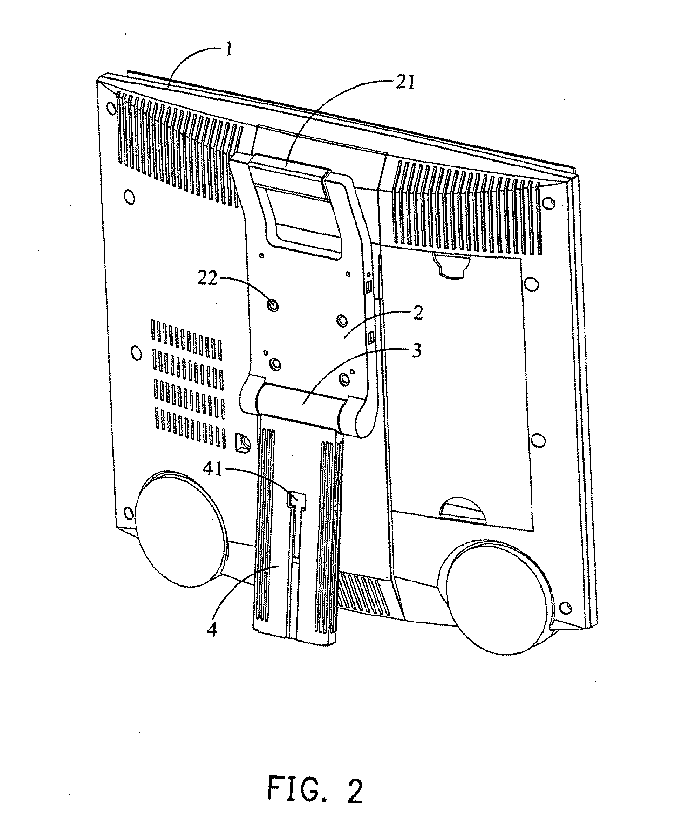

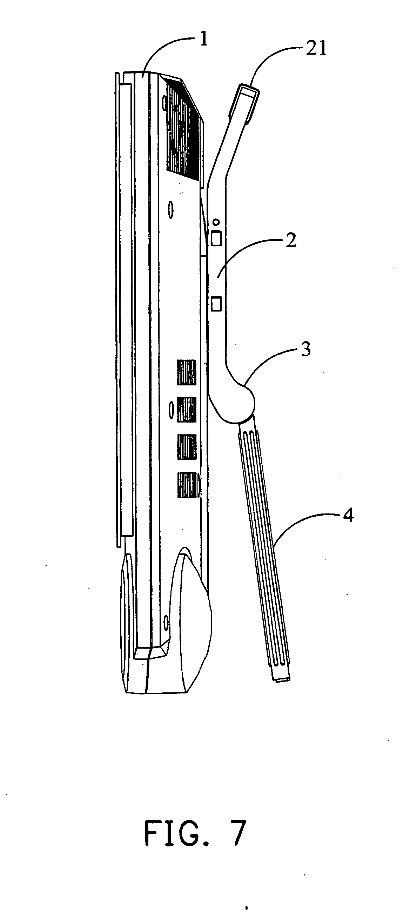

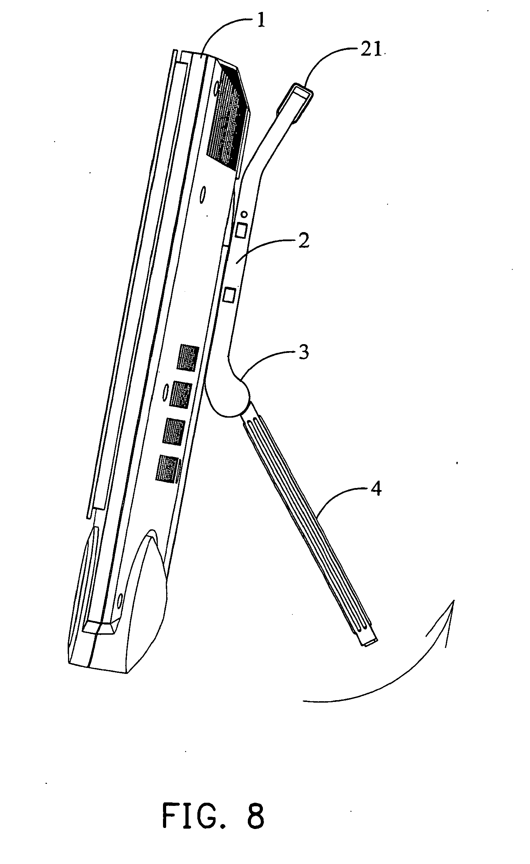

In FIG. 2, moreover, the flat display comprises a carrying portion 2 with the handle 21 and a plurality of screw holes 22 therein. The carrying portion 2 and the main body 1 are joined by the screws (not shown) in the screw holes 22. The simple stand 4 is connected to the carrying portion 2 with a hinge 3. Furthermore, the simple stand 4 can rotate within a specified range of angle along the hinge 3 with the simple stand 4 and the main body 1 at a small angle (as shown in FIG. 7) or at a large angle (as shown in FIG. 8).

Additionally, instead of connecting to the carrying portion 2, the simple stand 4 can also connect to the main body 1 by a hinge directly.

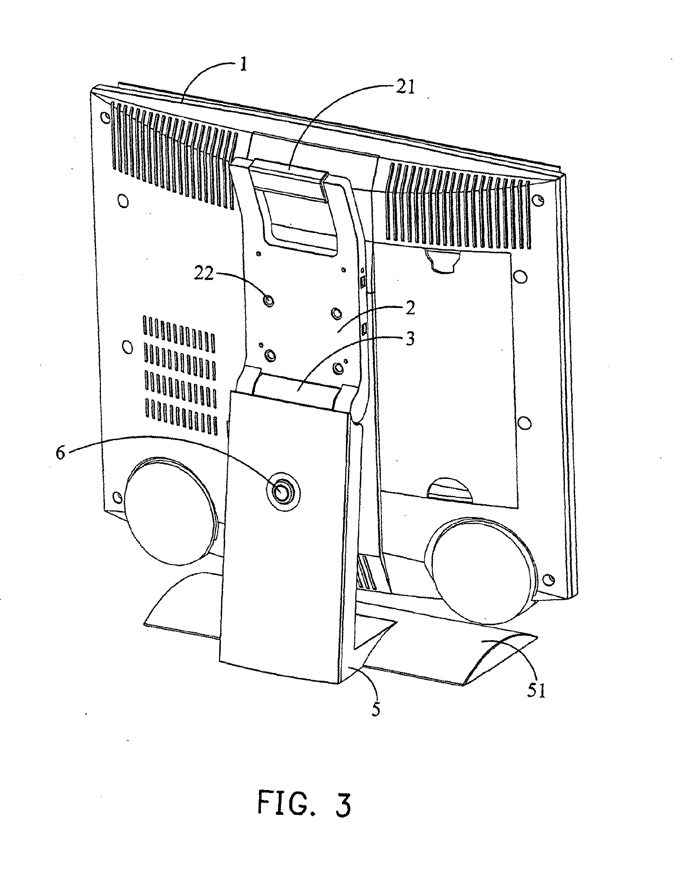

In FIG. 3, the flat display is supported by the base stand 5 connected to the simple stand 4. The base stand 5 is hollow to house the simple stand 4 when the simple stand 4 and the base stand 5 are connected. Moreover, The base stand 5 comprises a pedestal 51 with a flat bottom surface so that the base stand 5 can provide a stable support.

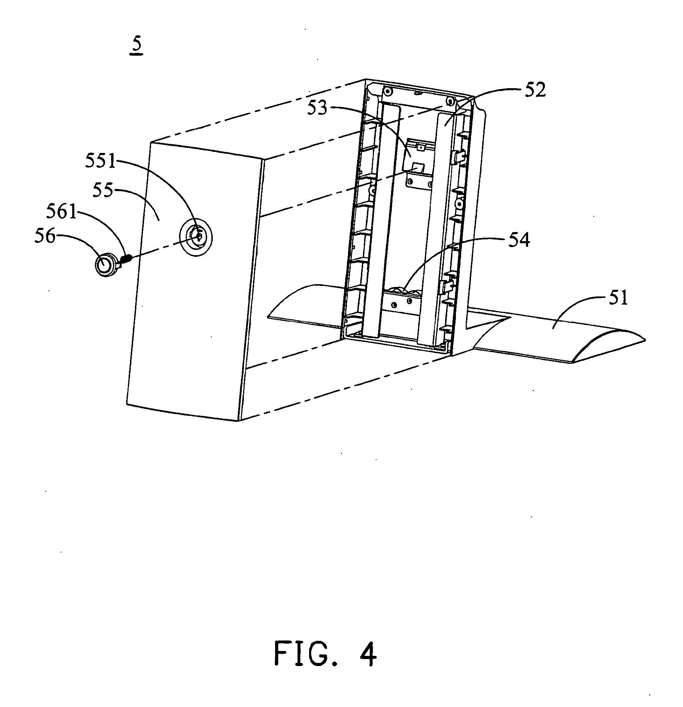

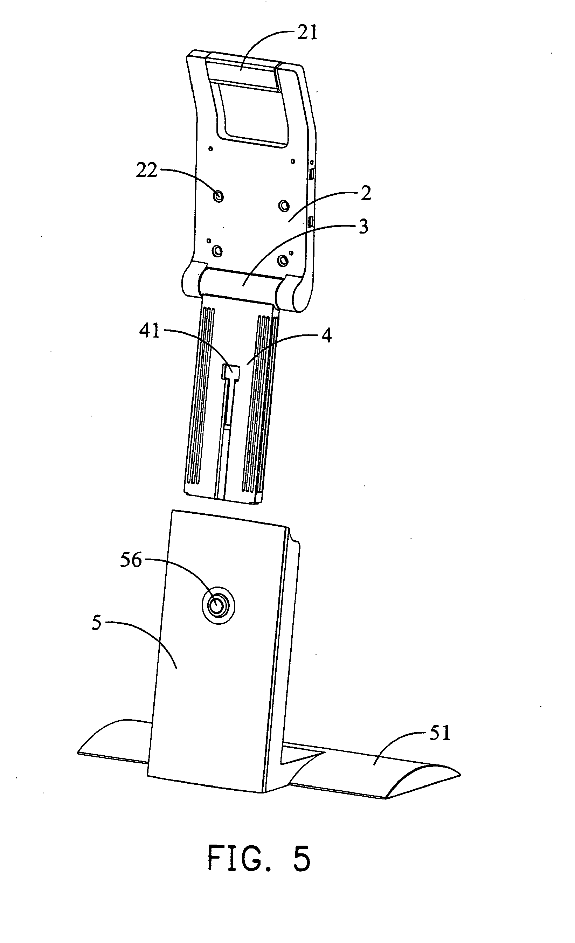

In FIG. 4 and FIG. 5, a pair of parallel guide rails 52 and an engaging portion 53 are disposed inside the base stand 5. When connecting the simple stand 4 and the base stand 5, the simple stand 4 is inserted along the guide rails 52 until contacting a spring 54 disposed in the bottom of the groove 52. With continuing pushing of the simple stand 4 downward, the reverse spring force against the simple stand 4 increases, and the simple stand 4 and the base stand 5 are tightly combined while the engaging portion 53 joins into the hole 41 of the simple stand 4.

Since the engaging portion 53 has a spring (not shown) inside, when the hole 41 moves to the position of the engaging portion 53, the engaging portion 53 spontaneously joins into the hole 41 by spring force. Thus, the simple stand 4 and the base stand 5 are connected.

Furthermore, users can separate the base stand 5 from the simple stand 4 by pushing a button 56. In FIG. 4, the button 56 is disposed in the back of the base stand 5. A protrusion 561 connected to the button 56 passes through a hole 551 of a cover 55 and contacts with the engaging portion 53. When pushing the button 56, the spring inside the engaging portion 53 is compressed, and the engaging portion 53 is separated from the hole 41. Thus, users can easily pull the handle 21 up so that the base stand 5 is separated from the simple stand 4.

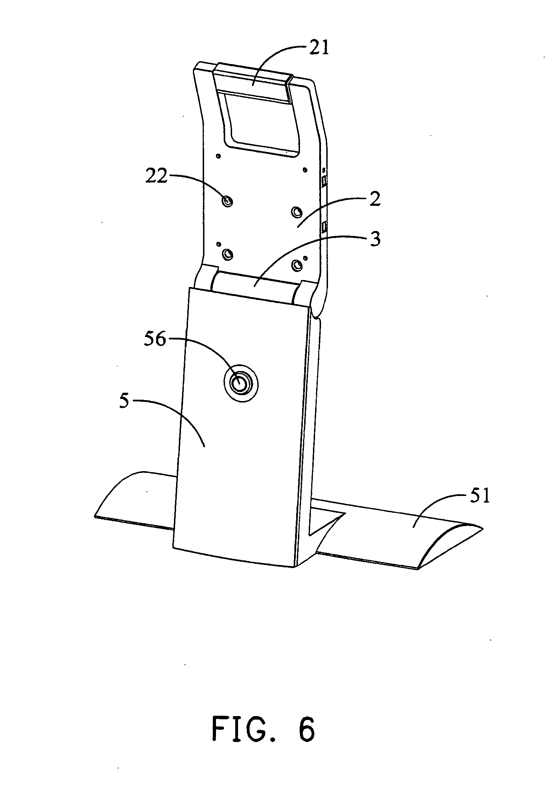

Before connecting the base stand 5 and the simple stand 4, as shown in FIG. 5, the simple stand 4 has to be inserted into the hollow base stand 5 from top to bottom. In FIG. 6, after inserting the simple stand 4, the hole 41 and the engaging portion 53 are joined so that the simple stand 4 is housed and connected inside the base stand 5.

The present invention provides a flat display with a replaceable base stand to easily combine and separate the base stand 5 and the simple stand 4. The advantage of the present invention is that users can selectively position the flat display using the base stand 5 or the simple stand 4 in different environments.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A flat display, comprising:
a main body (1);
a first stand (4) hinged on the main body (1);
a second stand (5) being hollow to house the first stand (4) and detachably connected to the first stand (4);
**characterized in that** the flat display stands on a surface by way of the main body (1) and the first stand (4) both contacting the surface when the second stand (5) is detached from the first stand (4), and the flat display stands on the surface only by way of the second stand (5) contacting the surface when the first stand (4) is housed in the second stand (5).

2. (Currently amended) The flat display as claimed in claim 1, **characterized in that** when the flat display stands on the surface by way of the main body (1) and the first stand (4), the main body (1) and the first stand (4) form a specific angle.

3. (Previously presented) The flat display as claimed in claim 1, **characterized in that** the second stand (5) comprises:
a flat bottom surface at a first end of the second stand (5);
an opening at a second end of the second stand (5) for insertion of the first stand (4) into the second stand, wherein the second end is opposite to the first end; and
a rail (52) inside the second stand (5) for guiding insertion of the first stand (4) into the second stand (5);
wherein the second stand (5) comprises a flat bottom surface to stabilize the main body (1) when the flat display stands on the surface only by way of the second stand (5).

4. (Previously presented) The flat display as claimed in claim 1, **characterized in that** the first stand (4) defines a hole (41), and the second stand (5) comprises an engaging portion (53) and a first spring, the first spring forcing the engaging (53) portion in the hole (41) to allow connection between the first stand (4) and the second stand (5).

5. (Previously presented) The flat display as claimed in claim 1, **characterized in that** the second stand (5) further comprises a button (56) forcing the engaging portion (53) to separate from the hole (41), to detach the second stand (5) from the first stand (4).

6. (Previously presented) The flat display as claimed in claim 1, **characterized in that** the second stand (5) further comprises a rail (52) inside for guiding insertion of the first stand (4) into the second stand (5).

7. (Previously presented) The flat display as claimed in claim 1, **characterized in that** the second stand (5) further comprises a second spring (54) disposed at a bottom of the rail (52) to push against the first stand (4) when the first stand (4) is inserted in the second stand (5).

8. (Previously presented) The flat display as claimed in claim 1, **characterized in that** when the flat display stands on the surface only by way of the second stand (5), the main body (1) is suspended from the surface.

9. (Previously presented) The flat display as claimed in claim 1 **characterized in that** it further comprises a carrying portion (2) fixed to the main body (1) and pivotally connected to the first stand (4), wherein the carrying portion (2) comprises a handle (21) for lift.

## Patentansprüche

1. Flachbildschirm aufweisend:
einen Hauptkörper (1);
einen mit dem Hauptkörper (1) gelenkig verbundenen ersten Ständer (4);
einen zweiten Ständer (5), der hohl ist, um den ersten Ständer (4) aufzunehmen und lösbar mit dem ersten Ständer (4) verbunden ist;
**dadurch gekennzeichnet, dass** der Flachbildschirm auf einer Oberfläche steht, indem der Hauptkörper (1) und der erste Ständer (4) beide die Oberfläche berühren, wenn der zweite Ständer (5) von dem ersten Ständer (4) getrennt ist,
und der Flachbildschirm nur mittels des zweiten die Oberfläche berührenden Ständers (5) auf der Oberfläche steht, wenn der ersten Ständer (4) in dem zweiten Ständer (5) aufgenommen ist.

2. Flachbildschirm nach Anspruch 1, **dadurch gekennzeichnet, dass** wenn der Flachbildschirm auf der Oberfläche steht, indem der Hauptkörper (1) und der erste Ständer (4) die Oberfläche berühren, der Hauptkörper (1) und der erste Ständer (4) einen bestimmten Winkel bilden.

3. Flachbildschirm nach Anspruch 1, **dadurch gekennzeichnet, dass** der zweite Ständer (5) aufweist:
eine flache Unterseite an einem ersten Ende des zweiten Ständers (5);
eine Öffnung an einem zweiten Ende des zweiten Ständers (5), um den ersten Ständer (4) in den zweiten Ständer einzuführen, wobei das zweite Ende dem ersten Ende gegenüberliegt; und
eine Führung (52) innerhalb des zweiten Ständers (5), um den ersten Ständer (4) geführt in den zweiten Ständer (5) einzuführen;
wobei der zweite Ständer (5) eine flache Unterseite besitzt, um den Hauptkörper (1) zu stabilisieren, wenn der Flachbildschirm nur mittels des zweiten Ständers (5) auf der Oberfläche steht.

4. Flachbildschirm nach Anspruch 1, **dadurch gekennzeichnet, dass** der erste Ständer (4) eine Öffnung (41) definiert, und der zweite Ständer (5) ein Einrastteil (53) und eine erste Feder aufweist, die erste Feder drückt den Einrastteil (53) in die Öffnung (41), um eine Verbindung zwischen dem ersten Ständer (4) und dem zweiten Ständer (5) zu ermöglichen.

5. Flachbildschirm nach Anspruch 1, **dadurch gekennzeichnet, dass** der zweite Ständer (5) zudem einen Knopf (56) aufweist, um dem Einrastteil (53) eine Trennung von der Öffnung (41) aufzuzwingen, um den zweiten Ständer (5) von dem ersten Ständer (4) zu entfernen.

6. Flachbildschirm nach Anspruch 1, **dadurch gekennzeichnet, dass** der zweite Ständer (5) ferner eine interne Schiene (52) aufweist, für ein geführtes Einführen des ersten Ständers (4) in den zweiten Ständer (5).

7. Flachbildschirm nach Anspruch 1, **dadurch gekennzeichnet, dass** der zweite Ständer (5) ferner eine unten an der Schiene (52) angeordnete zweite Feder (54) aufweist, um gegen den ersten Ständer (4) zu drücken, wenn der erste Ständer (4) in den zweiten Ständer (5) eingeführt ist.

8. Flachbildschirm nach Anspruch 1, **dadurch gekennzeichnet, dass** wenn der Flachbildschirm nur mittels des zweiten Ständers (5) auf der Oberfläche steht, der Hauptkörper (1) von der Oberfläche beabstandet ist.

9. Flachbildschirm nach Anspruch 1, **dadurch gekennzeichnet, dass** er ferner einen am Hauptkörper (1) befestigten und drehbar mit dem erste Ständer (4) verbundenen Tragteil (2) aufweist, wobei der Tragteil (2) einen Griff (21) zum Anheben aufweist.

## Revendications

1. Dispositif d'affichage plat, comprenant :
un corps principal (1) ;
un premier support (4) articulé sur le corps principal (1) ;
un second support (5) qui est creux afin de contenir le premier support (4) et relié de manière amovible au premier support (4) ;
**caractérisé en ce que** le dispositif d'affichage plat est dressé sur une surface au moyen du corps principal (1) et du premier support (4) les deux étant en contact avec la surface lorsque le second support (5) est séparé du premier support (4), et le dispositif d'affichage plat est dressé sur la surface uniquement au moyen du deuxième support (5) en contact avec la surface lorsque le premier support (4) est contenu dans le second support (5).

2. (Modifié) Dispositif d'affichage plat selon la revendication 1, **caractérisé en ce que**, lorsque le dispositif d'affichage plat est dressé la surface au moyen du corps principal (1) et du premier support (4), le corps principal (1) et le premier support (4) forment un angle spécifique.

3. (Inchangé) Dispositif d'affichage plat selon la revendication 1, **caractérisé en ce que** le second support (5) comprend :
une surface inférieure plate à une première extrémité du second support (5) ;
une ouverture à une seconde extrémité du second support (5) afin d'assurer l'insertion du premier support (4) dans le second support, dans lequel la seconde extrémité est opposée à la première extrémité ; et
un rail (52) à l'intérieur du second support (5) afin de guider l'insertion du premier support (4) dans le second support (5) ;
dans lequel le second support (5) comprend une surface inférieure plate afin de stabiliser le corps principal (1) lorsque le dispositif d'affichage plat est dressé sur la surface uniquement au moyen du second support (5).

4. (Inchangé) Dispositif d'affichage plat selon la revendication 1, **caractérisé en ce que** le premier support (4) définit un orifice (41), et le second support (5) comprend une partie de couplage (53) et un premier ressort, le premier ressort forçant la partie de couplage (53) dans l'orifice (41) afin de permettre le couplage entre le premier support (4) et le second support (5).

5. (Inchangé) Dispositif d'affichage plat selon la revendication 1, **caractérisé en ce que** le second support (5) comprend, en outre, un bouton (56) forçant la partie de couplage (53) à se séparer de l'orifice (41), de manière à séparer le second support (5) du premier support (4).

6. (Inchangé) Dispositif d'affichage plat selon la revendication 1, **caractérisé en ce que** le second support (5) comprend, en outre, un rail (52) interne afin de guider l'insertion du premier support (4) dans le second support (5).

7. (Inchangé) Dispositif d'affichage plat selon la revendication 1, **caractérisé en ce que** le second support (5) comprend, en outre, un second ressort (54) disposé au niveau d'une partie inférieure du rail (52) afin de pousser contre le premier support (4) lorsque le premier support (4) est inséré dans le second support (5).

8. (Inchangé) Dispositif d'affichage plat selon la revendication 1, **caractérisé en ce que**, lorsque le dispositif d'affichage plat est dressé sur la surface uniquement au moyen du second support (5), le corps principal (1) est suspendu par rapport à la surface.

9. (Inchangé) Dispositif d'affichage plat selon la revendication 1 **caractérisé en ce qu'**il comprend, en outre, une partie de transport (2) fixée sur le corps principal (1) et couplée de manière à pouvoir pivoter au premier support (4), dans lequel la partie de transport (2) comprend une poignée (21) afin de le soulever.
